# EUROPEAN PATENT SPECIFICATION

(11) **EP 2 704 484 B1**
(45) Date of publication and mention of the grant of the patent: **20.01.2021**
(21) Application number: 12182754.7
(22) Date of filing: 03.09.2012
(51) Int. Cl.: H04W 36/00

(54) **Method for performing a handover using an authorization ticket**
Verfahren zur Durchführung einer Übergabe mittels Autorisierungstickets
Procédé pour effectuer un transfert à l'aide d'un ticket d'autorisation

(43) Date of publication of application: 05.03.2014
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Bonneville, Hervé, 35708 RENNES Cedex 7 (FR); Gresset, Nicolas, 35708 RENNES Cedex 7 (FR); Khanfouci, Mourad, 35708 Rennes Cedex 7 (FR)
(74) Representative: Cabinet Le Guen Maillet

(56) References cited:
- WO-A1-2007/004051
- US-A1- 2011 269 464
- US-A1- 2011 269 465
- US-A1- 2011 274 086

## Description

The present invention generally relates to performing a handover from a source base station to a target base station, whereas access to services of the target base station is restricted to mobile terminals having subscribed to the services.

In LTE (*Long-Term Evolution*), UEs (*User Equipments*) are served by a core network via base stations, also referred to as eNodeBs. Each eNodeB manages a cell, wherein a cell is an area for which UEs located in the cell can be handled by the concerned base station, *i.e.* can communicate with a remote telecommunication device by accessing the core network via the base station.

Handover takes place when a UE moves from one cell to another. Two types of handover exist in LTE: S1 and X2 handovers. S1 handovers are performed between a source eNodeB and a target eNodeB via their S1 interfaces, wherein the S1 interface connects the considered eNodeB to the core network. X2 handovers are performed between the source eNodeB and the target eNodeB via their X2 interfaces, wherein the X2 interface directly connects the considered eNodeB to at least one neighbouring eNodeB. Two eNodeBs are considered as neighbours when their cells overlap. For mobility within an LTE system, X2 handovers are generally used when eNodeBs are connected via their X2 interfaces, except when the access to the cell served by the target eNodeB is restricted to a predefined set of subscribers (CSG for *Closed Subscriber Group*). In this case, S1 handovers are performed in order to allow the core network entities, and more particularly a connection management entity referred to as MME (*Mobility Management Entity*), to perform cell access control.

The patent application published under reference US 2011/269465 A1 discloses a method for performing handover of a user equipment from a source base station to a target base station, potentially using X2 interfaces, taking into account CSG contraints.

Another example can be found in patent application US2011/274086. However performing S1 handover is time-consuming. S1 handover is moreover network resources consuming, as it requires data exchanges between the base stations and the core network entities.

It is desirable to overcome the aforementioned problems which occur in typical wireless cellular communications networks, and more particularly in LTE or LTE-A communications networks.

In particular, it is desirable to provide a solution that allows reducing the time needed to perform a handover for a user equipment, while ensuring a certain level of access control.

It is furthermore desirable to provide a solution that allows offloading traffic via the core network, while ensuring the certain level of access control.

It is furthermore desirable to keep UEs subscription data within the extent of the core network as much as possible, for privacy considerations.

It is furthermore desirable to provide a solution that is easy-to-implement and that is cost-effective.

To that end, the present invention concerns a method for performing a handover of a mobile terminal from a source base station to a target base station, the source and target base stations being adapted to directly communicate with each other via first respective communication interfaces, the source and target base stations being adapted to communicate via second respective communication interfaces with a core network entity, the core network entity managing subscriptions to services of at least the target base station and authorizing access to said services via handover to only subscribers to said services. The method is such that it comprises: obtaining an authorisation ticket provided by the mobile terminal; performing directly the handover via the first communication interfaces, when the obtained authorisation ticket is validated on the basis of a decrypting key associated with the services of the target base station.

Thus, the time needed to perform the handover for the mobile terminals is reduced, while a certain level of access control to services of the target base station is ensured. Offloading of traffic originally performed via the core network is moreover achieved, while ensuring the certain level of access control.

It has to be understood that the core network entity represents a single device of the core network or plural devices of the core network providing the functionality of managing subscriptions to services of the target base station and authorizing access to said services via handover to only subscribers to said services.

According to a particular feature, the method comprises requesting authorization from said core network entity for the mobile terminal to access via handover the services of the target base station, when the obtained authorization ticket is not validated on the basis of the decrypting key associated with the services of the target base station.

Thus, the handover might be performed in case where the unsuccessful validation of the obtained authorization ticket doesn't mean that the mobile terminal has not subscribed to services of the target base station. Such a situation may occur when the authorization ticket and the decrypting key are temporarily not synchronized.

According to a particular feature, requesting authorization from said core network entity for the mobile terminal to access via handover the services of the target base station is performed by initiating the handover via the second communication interfaces.

Thus, when the authorization ticket is valid, the handover is directly performed between the source and target base stations without access control by the core network entity. When implemented in the LTE context, it means that an X2 handover is performed when the authorization ticket is valid, and that an S 1 handover is performed otherwise.

According to a particular feature, the core network entity performs: obtaining the decrypting key, enabling decrypting data encrypted on the basis of an encrypting key; transmitting the decrypting key to at least one base station; generating an authorization ticket, intended to be provided to a certified mobile terminal, on the basis of the encrypting key; and transmitting the generated authorization ticket toward the certified mobile terminal to which the authorization ticket is intended.

Thus, the core network entity can manage offloading of signalling from the core network toward bases stations, while a certain level of access control to the services of at least the target base station is ensured.

According to a particular feature, the authorization ticket is generated by encrypting information comprising: an identifier of the core network entity; and an identifier of at least one service to which the certified mobile terminal has subscribed, or an identifier of at least one cell managed by one base station to which the certified mobile terminal has already undergone a handover with authorization from the core network entity.

Thus, such information encrypted in the authorization ticket allows reinforcing the security in accessing the services of the target base station when no authorization from the core network entity is requested.

According to a particular feature, the target base station performs: obtaining the decrypting key, enabling decrypting data encrypted on the basis of an encrypting key; generating an authorization ticket, intended to be provided to a certified mobile terminal, on the basis of the encrypting key; transmitting the generated authorization ticket to the certified mobile terminal.

Thus, the target base station can perform offloading of signalling from the core network toward at least the target base station, while a certain level of access control to the services of at least the target base station is ensured.

According to a particular feature, the authorization ticket is generated by encrypting information comprising an identifier of the target base station and/or an identifier of the cell managed by the target base station.

Thus, such information encrypted in the authorization ticket allows reinforcing the security in accessing the services of the target base station when no authorization from the core network entity is requested.

According to a particular feature, the target base station generates the authorization ticket for the mobile terminal, when the mobile terminal has undergone a handover to the target base station with authorization from said core network entity.

Thus, the target base station is able to know that the mobile terminal can be trusted when declaring that said mobile terminal has subscribed to the services of the target base station, in the context of a handover.

According to a particular feature, the authorization ticket provided by the mobile terminal is obtained by the source base station, and the target base station transmits the decrypting key to the source base station.

According to a particular feature, the authorization ticket provided by the mobile terminal is obtained by the source base station, and the source base station transmits the obtained authorization ticket to the target base station.

According to a particular feature, the authorization ticket is generated by encrypting information comprising a timestamp information representative of an expiry instant of the authorization ticket or of a creation instant of the authorization ticket, and said method comprises checking whether the authorization ticket is valid on the basis of said timestamp information.

Thus, the validity of the authorization ticket is time-limited and access control by the core network entity is then forced when the authorization ticket has expired. It allows reinforcing the securing in accessing the services of the target base station.

According to a particular feature, the authorization ticket is generated by encrypting information comprising an identifier of the authorization ticket, and said method comprises checking whether the authorization ticket is valid by comparing said identifier with at least one identifier contained in a revocation list.

Thus, duplication of the authorization ticket from the certified mobile terminal to a malicious mobile terminal has no effect to access the services of the target base station.

The present invention also concerns a system for performing a handover of a mobile terminal from a source base station to a target base station, the source and target base stations being adapted to directly communicate with each other via first respective communication interfaces, the source and target base stations being adapted to communicate via second respective communication interfaces with a core network entity, the core network entity managing subscriptions to services of at least the target base station and authorizing access to said services via handover to only subscribers to said services. The system is such that it implements: means for obtaining an authorization ticket provided by the mobile terminal; means for performing directly the handover via the first communication interfaces, implemented when the obtained authorization ticket is validated on the basis of a decrypting key associated with the services of the target base station.

The term system as used herein refers to either a device, a plurality of devices cooperating to implement the aforementioned means or causing the implementation of the aforementioned means.

The present invention also concerns a mobile terminal intended to be used in a wireless cellular communications network, the mobile terminal comprising means for receiving signals from at least one base station of the wireless cellular communications network and means for transmitting to a base station of the wireless cellular communications network an indication of services to which the mobile terminal has subscribed as well as measurements reports indicative of a quality of the signals received from at least one base station. The mobile terminal is such that it comprises: means for obtaining an authorization ticket; means for transmitting the authorization ticket to a base station together with the indication of services to which the mobile terminal has subscribed and the measurements reports.

The present invention also concerns, in at least one embodiment, a computer program that can be downloaded from a communication network and/or stored on a medium that can be read by a computer and run by a processor. This computer program comprises instructions for implementing the aforementioned method in any one of its embodiments, when said program is run by the processor. The present invention also concerns information storage means, storing such a computer program.

Since the features and advantages related to the system, to the mobile terminal and to the computer program are identical to those already mentioned with regard to the corresponding aforementioned methods, they are not repeated here.

The characteristics of the invention will emerge more clearly from a reading of the following description of an example of embodiment, said description being produced with reference to the accompanying drawings, among which:
Fig. 1 schematically represents part of a wireless cellular communications network in which the present invention may be implemented;
Fig. 2 schematically represents an architecture of a base station, a home base station or a core network entity of the wireless cellular communications network;
Fig. 3 schematically represents an algorithm for performing a handover from a source base station to a target base station, according to the present invention;
Fig. 4 schematically represents an algorithm performed by the core network entity for providing an authorization ticket to a user equipment;
Fig. 5 schematically represents an algorithm performed by the source base station for performing the handover, according to a first embodiment;
Fig. 6 schematically represents an algorithm performed by the source base station for performing the handover, according to a second embodiment;
Fig. 7 schematically represents an algorithm performed by the target base station for performing the handover, according to the second embodiment;
Fig. 8 schematically represents a first algorithm performed by the core network entity for revoking the authorization ticket provided to the user equipment;
Fig. 9 schematically represents a second algorithm performed by the core network entity for revoking the authorization ticket provided to the user equipment.

Even though the following description details the present invention in the scope of a deployment of wireless cellular communications networks of LTE or LTE-A type, the principles detailed hereinafter can be similarly applied in the deployment of other kinds of wireless cellular communications networks. More particularly, the principles detailed hereinafter can be similarly applied for performing a handover from a first base station to a second base station, wherein access to services of at least the second base station is restricted to a predefined group of subscribers and wherein the first and second base stations comprise interface means for directly communicating with each other, in addition to interface means with a core network comprising an entity checking whether a mobile terminal is authorized to access the services of at least the second base station. The process performed by said core network entity for checking whether a mobile terminal is authorized to access the services of a base station is also referred to as *access control.*

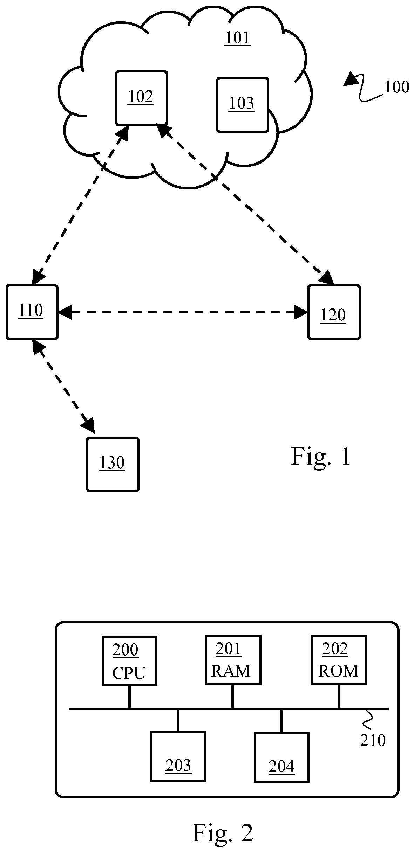

**Fig. 1** schematically represents part of a wireless cellular communications network 100 in which the present invention may be implemented.

The part of the wireless cellular communications network 100 shown in Fig. 1 comprises a core network 101. In the context of the 3GPP's SAE (*System Architecture Evolution*), the core network 101 comprises core network entities, such as MME 102 and HSS (*Home Subscriber Server*) 103 entities. The MME 102 is responsible for signalling in the wireless cellular communications network 100 and ensuring the connection management throughout the wireless cellular communications network 100. Several MMEs may exist in the wireless cellular communications network 100. The HSS 103 is a database containing user-related and subscription-related information. The MME 102 is also responsible for authenticating the user of any UE or mobile terminal, such as a UE 130, requesting access to services of the wireless cellular communications network 100 by interacting with the HSS 103.

Access to the services of the wireless cellular communications network 100 for the UE 130 is provided via a base station, or eNodeB, managing a cell in which the UE 130 is located.

In the description hereafter, a handover from a cell managed by a first base station 110, referred to as source base station, to a cell managed by a second base station 120, referred to as target base station, is considered. The cells are hereinafter referred to as *source cell* and *target cell* respectively.

Moreover, it is considered that the target cell 120 is a CSG cell. It means that services of the target base station are only accessible by members of a given CSG. Such services are for instance access to the target cell. CSGs can be identified by CSG identities, also referred to as CSG ID. Each base station managing a CSG cell broadcasts in the cell the CSG identity corresponding to the CSG cell.

The target cell may also be operated as a hybrid cell, which means it is accessed as a CSG cell by members of the corresponding CSG and as a normal cell by all other mobile terminals or UEs. In hybrid cells, members of the corresponding CSG are expected to receive preferential access to the services of the wireless cellular communications network 100. The meaning of the terms *CSG cell* as used herein also covers *hybrid cells*, as hybrid cells comprise the functionalities related to CSG management.

Therefore, the MME 102, in collaboration with the HSS 103, manages subscriptions to the services of the target base station 120 and authorises access to these services via handover to only subscribers of these services.

The source 110 and target 120 base stations comprise respective communication interfaces with the core network, as well as respective communication interfaces with neighbouring base stations. In other words, according to LTE terminology, the source 110 and target 120 base stations comprise S1 and X2 interfaces.

**Fig. 2** schematically represents an architecture of a base station or a core network entity of the wireless cellular communications network 100. Generally speaking, the architecture refers to a telecommunication device.

According to the shown architecture, the telecommunication device comprises the following components interconnected by a communications bus 210: a processor, microprocessor, microcontroller or CPU (*Central Processing Unit*) 200; a RAM (*Random-Access Memory*) 201; a ROM (*Read-Only Memory*) 202; an HDD (*Hard Disk Drive*) 203, or any other device adapted to read information stored on storage means; and, at least one communication interface 204.

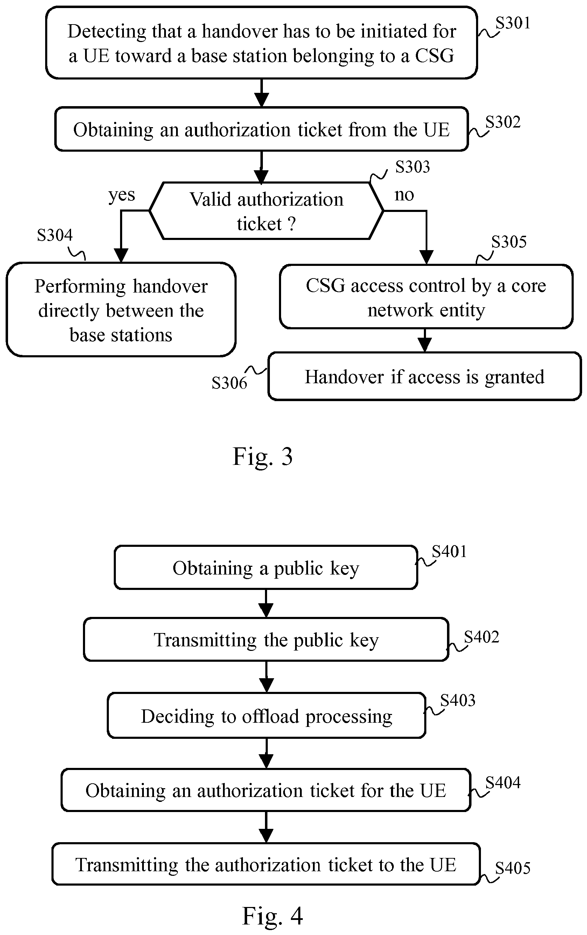

CPU 200 is capable of executing instructions loaded into RAM 201 from ROM 202, from an external memory such as an SD (*Secure Digital*) card, or from HDD 203. After the telecommunication device has been powered on, CPU 200 is capable of reading instructions from RAM 201 and executing these instructions. The instructions form one computer program that causes CPU 200 to perform some or all of the steps of at least one of the algorithms described hereafter with regard to Figs. 3 to 9.

Any and all steps of the algorithms described hereafter with regard to Figs. 3 to 9 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

**Fig. 3** schematically represents an algorithm illustrating a method for performing a handover from the source cell to the target cell.

The method comprises a step S301 of detecting that a handover has to be performed for the UE 130 from the source base station 110 to the target base station 120. There may be different reasons why a handover might be needed. For instance:
- when the UE 130 is moving away from the area covered by the source cell and entering the area covered by the target cell, in order to avoid call or connection termination when the UE 130 gets outside the range of the source cell; or
- when the capacity for connecting new calls, or setting up new connections, of the source cell is reached, in order to free some capacity in the source cell for other UEs.

In order to enter a CSG cell, the UE 130 provides a GSG membership indication, preferably to the source base station 110. Indeed, following LTE requirements to facilitate access control, the UE 130 stores a list, called *CSG whitelist,* containing one or more CSG ID associated with the CSG cells in which the UE is allowed to access. In other words, the CSG whitelist is a list of services subscribed by the UE 130. The UE 130 uses the CSG whitelist along with the CSG ID broadcast by the CSG cell for CSG cell selection and reselection.

The CSG whitelist is maintained and provided to the UE 130 by the MME 102, or another core network entity, via the base station managing the cell in which the UE 130 is located. As the CSG whitelist is considered as sensitive UE subscription data, the CSG whitelist is transparently transported by the base stations, *i.e.* the CSG whitelist is not interpreted by, nor stored in, base stations. The MME 102 is connected, in the core network 101, to a CSG server (not shown) in charge of managing the CSG subscriptions. When a change occurs in the CSG subscriptions, leading to a change in the CSG whitelist of the UE 130, the CSG server instructs the MME 102 to provide the up-to-date CSG whitelist to the UE 130.

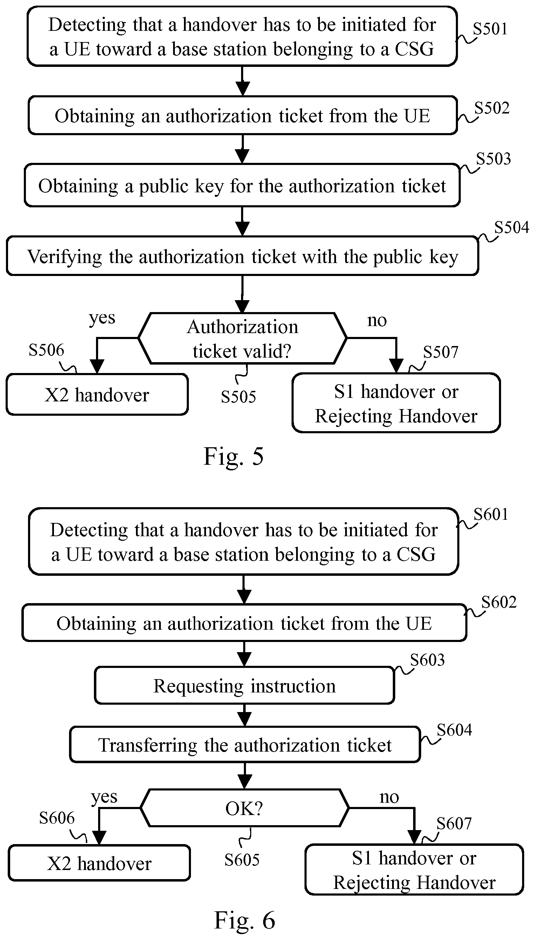

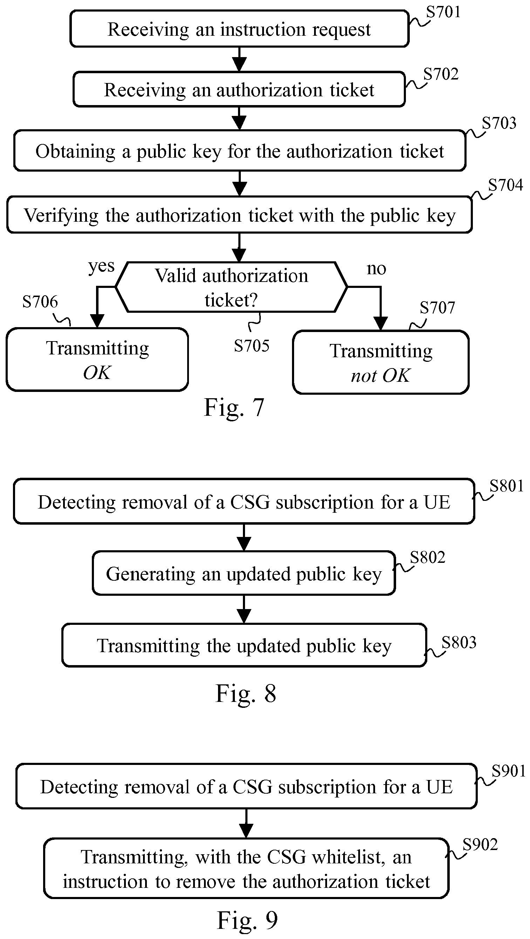

According to the present invention, in order to enter a CSG cell, the UE 130 further provides an authorization ticket to the source base station 110. An authorization ticket is a data structure composed of information relative to CSG access control and one or more cryptographic signatures allowing to guaranty information integrity and authenticity. Valid authorization ticket are certified by a core network entity, such as the MME 102 or the HSS 103. As detailed hereafter with regard to Figs. 6 and 7, the source base station 110 may transmit for validation, to the target base station 120, the authorization ticket provided by the UE 130.

A valid authorization ticket is an indication that the MME 102, or another core network entity, already performed an access control for the UE 130 in the context of a handover toward a given CSG cell.

The method therefore further comprises a following step S302 of obtaining the authorization ticket from the UE 130.

The method further comprises, a following step S303, of checking whether the authorization ticket provided by the UE 130 is valid. Checking whether the authorization ticket provided by the UE 130 is valid consists in decrypting the authorization ticket with a decrypting key, provided by the entity having generated the authorization ticket, and verifying that the authorization ticket has been effectively generated by the entity having provided the decrypting key and has neither been altered nor forged. The *decrypting key* is also referred to as *public key.*

When the authorization ticket provided by the UE 130 is valid, a step S304 is performed; otherwise, a step S305 is performed.

In the step S304, the handover is performed directly between the source 110 and target 120 base stations. It means that no access control is performed by the MME 102 or another core network entity. The source 110 and target 120 base stations therefore use their X2 interfaces for initiating the handover. No CSG subscription for the UE 130 is therefore verified by the MME102 or another core network entity, the access control to the services of the base station 120 being performed by the source base station 110 through the validation of the certified authorization ticket.

In the step S305, the CSG subscription for the UE 130 is verified by the MME 102 or another core network entity. If the access to the services of the target base station 120 is granted, in a step S306, the handover is performed. The handover may be performed via the core network 101 or between the source 110 and target 120 base stations without any core network entity further intervening.

It can be noticed that the access control to the services of the target base station 120 may be performed when initiating the handover via the core network 101, *i.e.* when the source base station 110 uses its S1 interface for initiating the handover.

Alternatively, the steps S305 and S306 are not performed and the source base station 110 rejects the handover or withdraws the handover decision, when the authorization ticket provided by the UE 130 is not valid.

Thus, when the handover is performed directly between the source 110 and target 120 base stations, the handover process is much faster than via the core network 101. The authorization ticket ensures that the access to the cell managed by the target base station 120 is restricted to UEs having the adequate CSG subscription. Offloading of signalling via the core network 101 is furthermore achieved.

It should be noticed that, once the handover is performed, the target base station 120 becomes a source base station in the meaning of the present invention.

Two embodiments are described hereinafter. In a first embodiment, the validity of the authorization ticket provided by the UE 130 is performed by the source base station 110. The first embodiment is described hereafter with regard to Fig. 5. In a second embodiment, the validity of the authorization ticket provided by the UE 130 is performed by the target base station 120. The second embodiment is described hereafter with regard to Figs. 6 and 7.

**Fig. 4** schematically represents an algorithm performed by the MME 102, or another core network entity, for providing an authorization ticket to the UE 130.

In a step S401, the MME 102 obtains one or more public keys. The MME 102 generates the public key(s) or retrieves the public key(s) from a memory zone that has been filled beforehand, for instance during manufacturing process of the MME 102 or during a configuration phase. The public keys are associated with respective corresponding *private keys,* also referred to as *encrypting keys.* In other words, a public key enables decrypting data encrypted on the basis of the corresponding private key.

One of the public keys, as well as the corresponding private key, may be identical for all MME devices of a group of MME devices, also referred to in LTE as a MME pool. Another public key, as well as the corresponding private key, may be identical for all base stations belonging to a CSG or a set of CSGs.

In a following step S402, the MME 102 transmits the generated public key(s) to at least one base station. In one embodiment, the MME 102 transmits the public key(s) to base stations, including the source base station 110, neighbouring the target base station 120. The validity of authorization tickets provided by UEs requesting entering the target cell can then be verified by a base station neighbouring the target base station 120. In another embodiment, the MME 102 transmits the public key to the target base station 120. The validity of authorization tickets provided by UEs requesting entering the target cell can then be verified by the target base station 120. In yet another embodiment, the MME 102 transmits the public key(s) to the target base station 120, which in turn transmits the public key(s) to its neighbouring base stations, including the source base station 110. The validity of authorization tickets provided by UEs requesting entering the target cell can then be verified by a base station neighbouring the target base station 120.

In a following step S403, the MME 102 decides to offload processing from the MME 102 toward base stations, for the access control toward at least one CSG cell regarding the UE 130. The MME 102 may make this decision, when one or more S1 handovers or access controls have been successfully performed for the UE 130 toward the at least one CSG cell. The MME 102 may also make this decision, when a ratio between successful S1 handovers or access controls performed for the UE 130 toward the at least one CSG cell and unsuccessful S1 handovers or access controls performed for the UE 130 toward the at least one CSG cell is reached. The MME 102 may also make this decision, when a predetermined load of the core network 101 is reached, in order to perform offload from core network entities to base stations.

In a following step S404, upon deciding to offload processing toward the base stations, the MME 102 obtains an authorization ticket for the UE 130, by encrypting information with the private key(s) associated with the public key(s) obtained in the step S401. In other words, the MME 102 obtains an authorization ticket for a UE that the MME 102 wishes to certify for X2 handovers toward at least one CSG cell, the UE 130 therefore becoming a certified UE.

Such information encrypted with the private key(s) preferably comprises:
- an identifier of the entity, such as the MME 102, having generated the authorization ticket; and
- an identifier of at least one CSG to which the UE 130 has subscribed and/or an identifier of at least one CSG cell toward which the UE 130 has already successfully undergone a S1 handover or an access control.

The encryption can consist of encrypting the whole authorization ticket, and/or obtaining an electronic signature of the authorization ticket, the electronic signature being included in the authorization ticket. The identifier of at least one CSG, or the identifier of at least one CSG cell, may be encrypted and/or signed with a private key different from the one used for encrypting or signing the whole authorization ticket. Thus, if the CSG membership is modified such that some subscribers are from now on revoked from the CSG, only the keys related to the CSG have to be modified.

When the information encrypted with the private key comprises an identifier of at least one CSG to which the UE 130 has subscribed, the authorization ticket can be used by the UE 130 to request handover toward any cell belonging to said at least one CSG. It means that the authorization ticket indicates that the UE 130 has already been granted access to said at least one cell belonging to said at least one CSG by the MME 102.

When the information encrypted with the private key(s) comprises an identifier of at least one CSG cell toward which the UE 130 has already successfully undergone a S1 handover or an access control, the authorization ticket can be used by the UE 130 to request handover toward said at least one CSG cell. It means that the authorization ticket indicates that the UE 130 has already been granted access to said at least one CSG cell by the MME 102.

Such information encrypted with the private key(s) may further comprise timestamp information being representative of an expiry instant of the authorization ticket. When the authorization ticket is verified for validity whereas the expiry instant is passed, the authorization ticket is considered as being not valid. Alternatively, the information encrypted with the private key(s) may further comprise timestamp information being representative of a creation instant of the authorization ticket. When the authorization ticket is verified for validity whereas the time period elapsed since the creation instant is greater than a predefined time duration, the authorization ticket is considered as being not valid.

Such information encrypted with the private key or keys may further comprise an identifier of the authorization ticket. When the authorization ticket is verified for validity, the identifier of the authorization ticket is checked among a list of revoked authorization tickets. If the identifier of the authorization ticket is included in the revocation list, the authorization ticket is considered as being not valid.

In a following step S405, the MME 102 transmits the authorization ticket to the UE 130 via the base station managing the cell in which the UE 130 is located. For instance, the MME 102 transmits the authorization ticket to the UE 130 via a base station managing a CSG cell toward which the UE 130 has been handed over. Alternatively, the MME 102 transmits the authorization ticket to the UE 130 via a base station managing a cell from which the UE 130 is about to be handed over toward a CSG cell.

The authorization ticket can then be transmitted later on by the UE 130 to a base station managing a cell in which the UE 130 is located, when requesting a handover toward a CSG cell for which the UE 130 has an appropriate subscription. More particularly, the authorization ticket can then be transmitted later on by the UE 130 to the source base station 110, when requesting a handover toward the target cell.

In an alternative embodiment, the algorithm of Fig. 4 is performed by the target base station 120.

In the step S401, the target base station 120 generates the public key(s). Each public key is associated with its corresponding private key.

Then, in the step S402, the target base station 120 may provide the public key(s) to its neighbouring base stations, including the source base station 110. It allows the neighbouring base stations to verify the validity of authorization tickets provided by UEs requesting handover toward the target cell. The execution of the step S402 is unnecessary when the validity of authorization tickets provided by UEs requesting handover toward the target cell is verified by the target base station 120, as described hereafter with regard to Figs. 6 and 7.

In the step S403, the target base station 120 decides, or is instructed, to offload processing from the MME 102 toward base stations, for the access control toward at least one CSG cell regarding the UE 130. For instance, the target cell is instructed by the MME 102 to allow from now on X2 handovers without access control by the MME 102, or another core network entity, for at least one UE. Such an instruction from the MME 102 allows the MME 102 to manage traffic and processing resources offloading from the core network 101 toward base stations. The target base station 120 may also decide on its own to allow from now on X2 handovers instead of S1 handovers.

In the step S404, the target base station 120 obtains the authorization ticket for the UE 130, by encrypting information with the private key associated with the public key(s) obtained in the step S401. In other words, the target base station 120 obtains an authorization ticket for a UE that the target base station 120 wishes to certify, the UE 130 therefore becoming a certified UE.

Such information encrypted with the private key preferably comprises an identifier of the target base station 120 or of the target cell. Such information encrypted with the private key may further comprise timestamp information being representative of an expiry instant of the authorization ticket or timestamp information being representative of a creation instant of the authorization ticket. Such information encrypted with the private key may further comprise an identifier of the authorization ticket.

In the step S405, the target base station 120 transmits the authorization ticket to the UE 130, when the UE 130 is located in the target cell.

**Fig. 5** schematically represents an algorithm performed by the source base station 110 for performing the handover, according to the first embodiment.

In a step S501, the source base station 110 detects that a handover has to be initiated for the UE 130 toward the target cell. The source base station 110 detects that a handover has to be initiated for the UE 130 when receiving a measurement report from the UE 130. The UE 130 periodically performs downlink radio channel measurements when receiving reference symbols (RS) from the source base station 110 and neighbouring base stations, such as the target base station 120. Downlink radio channel measurements are based on reference signal received power (*RSRP*) and reference signal received quality (*RSRQ*), as detailed in the 3GPP document TS 36.214, "*Evolved Universal Terrestrial Radio Access (E-UTRA) Physical Layer* - *Measurements".*

The UE 130 transmits to the source base station 110 measurement reports. Measurements are indicative of signal quality transmitted by neighbouring base stations, such as the target base station 120, and received by the UE 130. The source base station 110 uses the measurement reports to detect whether handover conditions are fulfilled for the UE 130 from radio perspective and to trigger a handover. For instance, when a handover is triggered on the basis of RSRP, the handover is triggered when RSRP for the target base station 120 is higher than RSRP for the source base station 110 by a predefined number of decibels for a certain time period.

The measurement report indicates the target cell, as identified by CGI (*Cell Global Identity*) or PCI (Physical Cell Identifier) information. The measurement report further indicates CSG membership of the UE 130, *i.e.* whether, from the point of view of the UE 130, the CSG ID transmitted by the target base station 120 is included in the CSG whitelist stored by the UE 130.

In a following step S502, the source base station 110 obtains an authorization ticket from the UE 130. The authorization ticket is expected to correspond to the authorization ticket transmitted by the MME 102 in the step S405 and stored by the UE 130, as already described. In a variant, the authorization ticket stored in the UE 130 has been provided to the UE 130 beforehand by an authoring unit or authoring person, such as an operator of the wireless cellular communications network 100.

The authorization ticket is preferably transmitted by the UE 130 together with the aforementioned measurement report or in the aforementioned measurement report.

In a following step S503, the source base station 110 obtains one or more public keys associated with the authorization ticket obtained from the UE 130. The obtained one or more public keys are expected to correspond to the one or more public keys transmitted by the MME 102 in the step S402, as already described with regard to Fig. 4. In a variant, the one or more public keys are stored in each concerned base station and have been provided beforehand by an authoring unit or authoring person, such as an operator of the wireless cellular communications network 100.

In a following step S504, the source base station 110 verifies the validity of the authorization ticket with the one or more public keys and with the CSG ID reported by the target base station 120, and in a following step S505, the source base station 110 checks whether the authorization ticket is valid. When the authorization ticket is valid, the source base station 110 performs a step S506; otherwise, the source base station 110 performs a step S507.

In the step S506, the source base station 110 initiates the handover directly with the target base station 120. The source base station 110 and target base station 120 therefore use their X2 interfaces for initiating the handover. There is no implication of the MME 102 nor any core network entity in the initiation of the X2 handover. When the X2 handover is completed between the source base station 110 and the target base station 120, the MME 102 is however notified by the target base station 120 that a handover has been performed for the UE 130. In LTE, the target base station 120 transmits a *Path Switch Request* message to the MME 102 in order to inform the MME 102 that the UE 130 has changed cell and to instruct the MME 102 to update the user plane routing accordingly. The MME 102 determines that an X2 handover has been performed for the UE 130 upon receiving the *Path Switch Request* message.

In the step S507, the source base station 110 performs the handover via the core network 101. The source 110 and target 120 base stations therefore use their S1 interfaces for performing the handover. The source base station 110 transmits a handover request to the MME 102 and provides the UE membership indication and the CSG ID of the target cell, as received from the UE 130 beforehand, to the MME 102 for checking. The MME 102 checks, in collaboration with the CSG server, that the UE membership indication is conform to the CSG subscription for the UE 130, and that the UE 130 is authorized to access the target cell. Upon success of the check, the MME 102 forwards the handover request to the target base station 120 and the handover process continues between the source 110 and target 120 base stations via the core network 101, namely via their S1 interfaces. As already explained with regard to the steps S305 and S306, the handover may consist in, first, requesting access control by the MME 102 or another core network entity and, then, performing an X2 handover toward the target cell. In this case, the source base station 110 receives from the MME 102 an indication that the access to the target cell is granted to the UE 130. Alternatively, as explained with regard to Fig. 3, the base station 110 reconsiders, in the step S507, its handover decision to that base station, and for example select another target base station for the UE 130.

**Fig. 6** schematically represents an algorithm performed by the source base station 110 for performing the handover, according to the second embodiment.

In a step S601, the source base station 110 detects that a handover has to be initiated for the UE 130 toward the target cell. The step S601 is similarly implemented as the step S501, as already described with regard to Fig. 5.

In a following step S602, the source base station 110 obtains an authorization ticket from the UE 130. The step S602 is similarly implemented as the step S502, as already described with regard to Fig. 5.

In a following step S603, the source base station 110 transmits to the target base station 120 a message requesting instruction to perform a handover for the UE 130 toward the target cell directly between the base stations.

In a following step S604, the source base station 110 transfers the authorization ticket to the target base station 120. The target base station 120 is therefore in charge of verifying the validity of the authorization ticket, as described hereafter with regard to Fig. 7.

In a preferred embodiment, the authorization ticket is transferred to the target base station 120 together with the message requesting that the handover be performed directly between the base stations or in the message requesting that the handover be performed directly between the base stations.

In a following step S605, the source base station 110 receives a response from the target base station 120 and checks whether the target base station 120 instructs the source base station 120 to perform the handover directly between the base stations. When the source base station is instructed to perform the handover directly between the base stations, a step S606 is performed; otherwise, a step S607 is performed.

In the step S606, the source base station 110 performs the handover directly with the target base station 120, as already described with regard to the step S506.

In the step S607, the source base station 110 performs the handover via the core network 101, as already described with regard to the step S507. As already explained with regard to the steps S305 and S306, the handover may consist in, first, requesting access control by the MME 102 or another core network entity and, then, performing an X2 handover toward the target cell. In this case, the source base station 110 receives from the MME 102 an indication that the access to the target cell is granted to the UE 130.

In a variant, in the step S607, the source base station 110 abandons performing a handover toward the target cell.

**Fig. 7** schematically represents an algorithm performed by the target base station 120 for performing the handover, according to the second embodiment.

In a step S701, the target base station 120 receives a message requesting instruction to perform a handover for the UE 130 toward the target cell directly between the base stations. This message corresponds to the message transmitted by the source base station 110 in the step S603.

In a following step S702, the target base station 120 receives an authorization ticket, as provided by the UE 130 to the source base station 110. This authorization ticket corresponds to the authorization ticket transmitted by the source base station 110 in the step S604.

In a following step S703, the target base station 120 obtains one or more public keys associated with the authorization ticket obtained from the UE 130. The one or more public keys are expected to correspond to the one or more public keys transmitted by the MME 102 in the step S402.

In a following step S704, the target base station 120 verifies the validity of the authorization ticket with the public key(s) and with its CSG ID, and in a following step S705, the target base station 120 checks whether the authorization ticket is valid. When the authorization ticket is valid, the target base station 120 performs a step S706; otherwise, the target base station 120 performs a step S707.

In the step S706, the target base station 120 authorises the source base station 110 to initiate the handover directly between the base stations. The target base station 120 transmits a response message authorising the source base station 110 to initiate the handover directly between the base stations.

In the step S707, the target base station 120 doesn't accept that the source base station 110 perform the handover directly between the base stations. The target base station 120 transmits a response message instructing the source base station 110 not to perform the handover directly between the base stations. Therefore an access control by the MME 102 would have to be requested by the source base station 110, or the source base station 110 would have to select another target base station for handing over the UE 130.

**Fig. 8** schematically represents a first algorithm performed by the MME 102, or another core network entity, for revoking the authorization ticket provided to the UE 130.

There is a need for being able to revoke the UE 130, for instance when at least one CSG has been removed from the subscription of the UE 130 or when the subscription to at least one CSG has expired.

In a step S801, the MME 102 detects a removal of a CSG subscription for the UE 130. For instance, this subscription expired and the UE 130 has no more access to the services offered by the base stations managing the concerned CSG cells. The MME 102 may be notified of this change in the CSG subscription by the CSG server.

In a following step S802, the MME 102 generates one or more updated public key(s). When the one or more public keys are related to the MME 102 and are changed, then all authorization tickets delivered by the MME 102 are invalidated. When the one or more public key(s) are related to a CSG subscription and are modified, only authorization tickets related to the concerned CSG members are invalidated.

In a following step S803, the MME 102 transmits the updated public key(s) to at least one base station. The transmission of the updated public key(s) occurs similarly as in the step S402, already described with regard to Fig. 4.

**Fig. 9** schematically represents a second algorithm performed by the MME 102, or another core network entity, for revoking the authorization ticket provided to the UE 130. This second algorithm is an alternative to the first algorithm already described with regard to Fig. 8.

In a step S901, the MME 102 detects a removal of a CSG subscription for the UE 130. The step S901 is similarly implemented as the step S801.

In a following step S902, the MME 102 instructs the UE 130 to remove the authorization ticket from its memory resources. In a preferred embodiment, the MME 102 transmits this instruction together with the up-to-date CSG whitelist resulting from the change of CSG subscription for the UE 130.

In a particular embodiment, when the MME 102 obtains the authorization ticket as described with regard to the step S404, the MME 102 includes an authorization ticket identifier. When the MME 102 detects a removal of a CSG subscription for the UE 130 as described with regard to the step S901, the MME 102 adds the authorization ticket identifier of the UE 130 in a list of revoked authorization tickets. The list of revoked authorization tickets is distributed to at least one base station as described with regard to the step S803.

## Claims

1. A method for performing a handover of a mobile terminal (130) from a source base station (110) to a target base station (120), the source and target base stations being adapted to directly communicate with each other via first respective communication interfaces, the source and target base stations being adapted to communicate via second respective communication interfaces with a core network entity (102), the core network entity being a mobility management entity managing subscriptions to services of at least the target base station and authorizing access to said services via handover to only subscribers to said services, **characterized in that** said method comprises:
- obtaining (S302) an authorization ticket provided by the mobile terminal;
- checking (S303) whether the authorization ticket provided by the mobile terminal is valid by decrypting the authorization ticket with a decrypting key provided by the mobility management entity having generated the authorization ticket and verifying that the authorization ticket has been effectively generated by the mobility management entity having provided the decryption key, a valid authorization ticket being an indication that the mobility management entity already performed access control for the mobile terminal in the context of the handover toward the target base station;
- performing (S304) directly the handover via the first communication interfaces, when the obtained authorization ticket is valid (S303).

2. The method according to claim 1, **characterized in that** it comprises:
- requesting (S305) authorization from said core network entity for the mobile terminal to access via handover the services of the target base station, when the obtained authorization ticket is not validated on the basis of the decrypting key associated with the services of the target base station.

3. The method according to claim 2, **characterized in that** requesting authorization from said core network entity for the mobile terminal to access via handover the services of the target base station is performed by initiating (S507) the handover via the second communication interfaces.

4. The method according to any one of claims 1 to 3, **characterized in that** the core network entity performs:
- obtaining (S401) the decrypting key, enabling decrypting data encrypted on the basis of an encrypting key;
- transmitting (S402) the decrypting key to at least one base station;
- generating (S404) an authorization ticket, intended to be provided to a certified mobile terminal, on the basis of the encrypting key; and
- transmitting (S405) the generated authorization ticket toward the certified mobile terminal to which the authorization ticket is intended.

5. The method according to claim 4, **characterized in that** the authorization ticket is generated by encrypting information comprising:
- an identifier of the core network entity; and
- an identifier of at least one service to which the certified mobile terminal has subscribed, or an identifier of at least one cell managed by one base station to which the certified mobile terminal has already undergone a handover with authorization from the core network entity.

6. The method according to any one of claims 1 to 3, **characterized in that** the target base station performs:
- obtaining the decrypting key, enabling decrypting data encrypted on the basis of an encrypting key;
- generating an authorization ticket, intended to be provided to a certified mobile terminal, on the basis of the encrypting key; and
- transmitting the generated authorization ticket to the certified mobile terminal.

7. The method according to claim 6, **characterized in that** the authorization ticket is generated by encrypting information comprising an identifier of the target base station and/or an identifier of the cell managed by the target base station.

8. The method according to any one of claims 6 and 7, **characterized in that** the target base station generates the authorization ticket for the mobile terminal, when the mobile terminal has undergone a handover to the target base station with authorization from said core network entity.

9. The method according to any one of claims 1 to 8, **characterized in that** the authorization ticket provided by the mobile terminal is obtained by the source base station, and **in that** the target base station transmits the decrypting key to the source base station.

10. The method according to any one of claims 1 to 8, **characterized in that** the authorization ticket provided by the mobile terminal is obtained by the source base station, and **in that** the source base station transmits the obtained authorization ticket to the target base station.

11. The method according to any one of claims 1 to 10, **characterized in that** the authorization ticket is generated by encrypting information comprising a timestamp information representative of an expiry instant of the authorization ticket or of a creation instant of the authorization ticket, and **in that** said method comprises checking whether the authorization ticket is valid on the basis of said timestamp information.

12. The method according to any one of claims 1 to 11, **characterized in that** the authorization ticket is generated by encrypting information comprising an identifier of the authorization ticket, and **in that** said method comprises checking whether the authorization ticket is valid by comparing said identifier with at least one identifier contained in a revocation list.

13. A system for performing a handover of a mobile terminal (130) from a source base station (110) to a target base station (120), the source and target base stations being adapted to directly communicate with each other via first respective communication interfaces, the source and target base stations being adapted to communicate via second respective communication interfaces with a core network entity (102), the core network entity being a mobility management entity managing subscriptions to services of at least the target base station and authorizing access to said services via handover to only subscribers to said services,
**characterized in that** said system implements:
- means for obtaining (S302) an authorization ticket provided by the mobile terminal;
- means for checking whether the authorization ticket provided by the mobile terminal is valid by decrypting the authorization ticket with a decrypting key provided by the mobility management entity having generated the authorization ticket and verifying that the authorization ticket has been effectively generated by the mobility management entity having provided the decryption key, a valid authorization ticket being an indication that the mobility management entity already performed access control for the mobile terminal in the context of the handover toward the target base station;
- means for performing (S304) directly the handover via the first communication interfaces, implemented when the obtained authorization ticket is valid.

## Patentansprüche

1. Verfahren zum Durchführen einer Übergabe eines mobilen Endgeräts (130) von einer Quellen-Basisstation (110) zu einer Ziel-Basisstation (120), wobei die Quellen- und die Ziel-Basisstation dazu geeignet sind, über erste jeweilige Kommunikationsschnittstellen direkt miteinander zu kommunizieren, wobei die Quellen- und die Ziel-Basisstation dazu geeignet sind, über zweite jeweilige Kommunikationsschnittstellen mit einer Kernnetzwerkeinheit (102) zu kommunizieren, wobei die Kernnetzwerkeinheit eine Mobilitätsmanagementeinheit ist, die Teilnahmen an Diensten von wenigstens der Ziel-Basisstation managt und einen Zugriff auf die Dienste über eine Übergabe nur zu Teilnehmern an den Diensten autorisiert, **dadurch gekennzeichnet, dass** das Verfahren folgendes umfasst:
- Erhalten (S302) einer durch das mobile Endgerät zur Verfügung gestellten Autorisierungskarte;
- Prüfen (S303), ob die durch das mobile Endgerät zur Verfügung gestellte Autorisierungskarte gültig ist, durch Entschlüsseln der Autorisierungskarte mit einem Entschlüsselungsschlüssel, der durch die Mobilitätsmanagementeinheit zur Verfügung gestellt ist, die die Autorisierungskarte erzeugt hat, und Verifizieren, dass die Autorisierungskarte effektiv durch die Mobilitätsmanagementeinheit erzeugt worden ist, die den Entschlüsselungsschlüssel zur Verfügung gestellt hat, wobei eine gültige Autorisierungskarte ein Anzeichen dafür ist, dass die Mobilitätsmanagementeinheit bereits eine Zugriffssteuerung für das mobile Endgerät in Zusammenhang mit der Übergabe in Richtung zur Ziel-Basisstation durchführte;
- direktes Durchführen (S304) der Übergabe über die ersten Kommunikationsschnittstellen, wenn die erhaltene Autorisierungskarte gültig ist (S303).

2. Verfahren nach Anspruch 1, **dadurch gekennzeichnet, dass** es folgendes umfasst:
- Anfordern (S305) einer Autorisierung von der Kernnetzwerkeinheit für das mobile Endgerät, um über eine Übergabe auf Dienste der Ziel-Basisstation zuzugreifen, wenn die erhaltene Autorisierungskarte nicht für gültig erklärt ist, auf der Basis des mit den Diensten der Ziel-Basisstation assoziierten Entschlüsselungsschlüssels.

3. Verfahren nach Anspruch 2, **dadurch gekennzeichnet, dass** ein Anfordern einer Autorisierung von der Kernnetzwerkeinheit für das mobile Endgerät, über eine Übergabe auf Dienste der Ziel-Basisstation zuzugreifen, durch Initiieren (S507) der Übergabe über die zweiten Kommunikationsschnittstellen durchgeführt wird.

4. Verfahren nach einem der Ansprüche 1 bis 3, **dadurch gekennzeichnet, dass** die Kernnetzwerkeinheit folgendes durchführt:
- Erhalten (S401) des Entschlüsselungsschlüssels, was auf der Basis eines Verschlüsselungsschlüssels verschlüsselte Entschlüsselungsdaten freigibt;
- Senden (S402) des Entschlüsselungsschlüssels zu wenigstens einer Basisstation;
- Erzeugen (S404) einer Autorisierungskarte, für die beabsichtigt ist, dass sie einem zertifizierten mobilen Endgerät zur Verfügung gestellt wird, auf der Basis des Verschlüsselungsschlüssels; und
- Senden (S405) der erzeugten Autorisierungskarte in Richtung zum zertifizierten mobilen Endgerät, für welches die Autorisierungskarte beabsichtigt ist.

5. Verfahren nach Anspruch 4, **dadurch gekennzeichnet, dass** die Autorisierungskarte durch Verschlüsseln von Information erzeugt wird, umfassend:
- einen Identifizierer der Kernnetzwerkeinheit; und
- einen Identifizierer von wenigstens einem Dienst, an welchem das zertifizierte mobile Endgerät teilgenommen hat, oder einen Identifizierer von wenigstens einer Zelle, die durch eine Basisstation gemanagt wird, zu welcher sich das zertifizierte mobile Endgerät bereits einer Übergabe mit einer Autorisierung von der Kernnetzwerkeinheit unterzogen hat.

6. Verfahren nach einem der Ansprüche 1 bis 3, **dadurch gekennzeichnet, dass** die Ziel-Basisstation folgendes durchführt:
- Erhalten des Entschlüsselungsschlüssels, was auf der Basis eines Verschlüsselungsschlüssels verschlüsselte Entschlüsselungsdaten freigibt;
- Erzeugen einer Autorisierungskarte, für die beabsichtigt ist, dass sie einem zertifizierten mobilen Endgerät zur Verfügung gestellt wird, auf der Basis des Verschlüsselungsschlüssels; und
- Senden der erzeugten Autorisierungskarte zum zertifizierten mobilen Endgerät.

7. Verfahren nach Anspruch 6, **dadurch gekennzeichnet, dass** die Autorisierungskarte durch Verschlüsselungsinformation erzeugt wird, die einen Identifizierer der Ziel-Basisstation und/oder einen Identifizierer der durch die Ziel-Basisstation gemanagten Zelle umfasst.

8. Verfahren nach einem der Ansprüche 6 und 7, **dadurch gekennzeichnet, dass** die Ziel-Basisstation die Autorisierungskarte für das mobile Endgerät erzeugt, wenn sich das mobile Endgerät einer Übergabe zur Ziel-Basisstation mit einer Autorisierung von der Kernnetzwerkeinheit unterzogen hat.

9. Verfahren nach einem der Ansprüche 1 bis 8, **dadurch gekennzeichnet, dass** die durch das mobile Endgerät zur Verfügung gestellte Autorisierungskarte durch die Quellen-Basisstation erhalten wird und dass die Ziel-Basisstation den Entschlüsselungsschlüssel zur Quellen-Basisstation sendet.

10. Verfahren nach einem der Ansprüche 1 bis 8, **dadurch gekennzeichnet, dass** die durch das mobile Endgerät zur Verfügung gestellte Autorisierungskarte durch die Quellen-Basisstation erhalten wird und dass die Quellen-Basisstation die erhaltene Autorisierungskarte zur Ziel-Basisstation sendet.

11. Verfahren nach einem der Ansprüche 1 bis 10, **dadurch gekennzeichnet, dass** die Autorisierungskarte durch Verschlüsselungsinformation erzeugt wird, die Zeitstempelinformation umfasst, die einen Verfallszeitpunkt der Autorisierungskarte oder einen Erzeugungszeitpunkt der Autorisierungskarte darstellt, und dass das Verfahren ein Prüfen auf der Basis der Zeitstempelinformation umfasst, ob die Autorisierungskarte gültig ist.

12. Verfahren nach einem der Ansprüche 1 bis 11, **dadurch gekennzeichnet, dass** die Autorisierungskarte durch Verschlüsselungsinformation erzeugt wird, die einen Identifizierer der Autorisierungskarte umfasst, und dass das Verfahren ein Prüfen durch Vergleichen des Identifizierers mit wenigstens einem in einer Sperrliste enthaltenen Identifizierer umfasst, ob die Autorisierungskarte gültig ist.

13. System zum Durchführen einer Übergabe eines mobilen Endgeräts (130) von einer Quellen-Basisstation (110) zu einer Ziel-Basisstation (120), wobei die Quellen- und die Ziel-Basisstation dazu geeignet sind, über erste jeweilige Kommunikationsschnittstellen direkt miteinander zu kommunizieren, wobei die Quellen- und die Ziel-Basisstation dazu geeignet sind, über zweite jeweilige Kommunikationsschnittstellen mit einer Kernnetzwerkeinheit (102) zu kommunizieren, wobei die Kernnetzwerkeinheit eine Mobilitätsmanagementeinheit ist, die Teilnahmen an Diensten von wenigstens der Ziel-Basisstation managt und einen Zugriff auf die Dienste über eine Übergabe nur zu Teilnehmern an den Diensten autorisiert,
**dadurch gekennzeichnet, dass** das System folgendes implementiert:
- Mittel zum Erhalten (S302) einer durch das mobile Endgerät zur Verfügung gestellten Autorisierungskarte;
- Mittel zum Prüfen, ob die durch das mobile Endgerät zur Verfügung gestellte Autorisierungskarte gültig ist, durch Entschlüsseln der Autorisierungskarte mit einem Entschlüsselungsschlüssel, der durch die Mobilitätsmanagementeinheit zur Verfügung gestellt ist, die die Autorisierungskarte erzeugt hat, und Verifizieren, dass die Autorisierungskarte effektiv durch die Mobilitätsmanagementeinheit erzeugt worden ist, die den Entschlüsselungsschlüssel zur Verfügung gestellt hat, wobei eine gültige Autorisierungskarte ein Anzeichen dafür ist, dass die Mobilitätsmanagementeinheit bereits eine Zugriffssteuerung für das mobile Endgerät in Zusammenhang mit der Übergabe in Richtung zur Ziel-Basisstation durchführte;
- Mittel zum direkten Durchführen (S304) der Übergabe über die ersten Kommunikationsschnittstellen, die implementiert sind, wenn die erhaltene Autorisierungskarte gültig ist.

## Revendications

1. Un procédé pour effectuer un transfert d'un terminal mobile (130) d'une station de base source (110) à une station de base cible (120), les stations de base source et cible étant adaptées pour communiquer directement l'une avec l'autre via des premières interfaces de communication respectives, les stations de base source et cible étant adaptées pour communiquer via des secondes interfaces de communication respectives avec une entité de réseau central (102), l'entité de réseau central étant une entité de gestion de mobilité gérant les abonnements aux services au moins de la station de base cible et autorisant l'accès auxdits services de transfert aux seuls abonnés desdits services, **caractérisé en ce que** ledit procédé comporte :
- obtenir (S302) un ticket d'autorisation fourni par le terminal mobile;
- vérifier (S303) si le ticket d'autorisation fourni par le terminal mobile est valide en déchiffrant le ticket d'autorisation avec une clé de décryptage fournie par l'entité de gestion de mobilité ayant généré le ticket d'autorisation et en vérifiant que le ticket d'autorisation a été effectivement généré par l'entité gestion de mobilité ayant fourni la clé de décryptage, un ticket d'autorisation valide étant une indication que l'entité de gestion de mobilité a déjà effectué un contrôle d'accès pour le terminal mobile dans le cadre du transfert vers la station de base cible;
- effectuer (S304) directement le transfert via les premières interfaces de communication, lorsque le ticket d'autorisation obtenu est valide (S303).

2. Le procédé selon la revendication 1, **caractérisé en ce qu'**il comprend:
- demander (S305) l'autorisation à ladite entité cœur de réseau pour que le terminal mobile accède par transfert aux services de la station de base cible, lorsque le ticket d'autorisation obtenu n'est pas validé sur la base de la clé de décryptage associée aux services de la base cible station.

3. Le procédé selon la revendication 2, **caractérisé en ce que** la demande d'autorisation auprès de ladite entité cœur de réseau pour que le terminal mobile accède par transfert aux services de la station de base cible se fait en initiant (S507) le transfert via les secondes interfaces de communication.

4. Le procédé selon l'une quelconque des revendications 1 à 3, **caractérisé en ce que** l'entité cœur de réseau effectue:
- obtenir (S401) la clé de déchiffrement, permettant de déchiffrer des données chiffrées sur la base d'une clé de chiffrement;
- transmettre (S402) la clé de déchiffrement à au moins une station de base;
- générer (S404) un ticket d'autorisation, destiné à être fourni à un terminal mobile certifié, sur la base de la clé de cryptage; et
- transmettre (S405) le ticket d'autorisation généré vers le terminal mobile certifié auquel le ticket d'autorisation est destiné.

5. Le procédé selon la revendication 4, **caractérisé en ce que** le ticket d'autorisation est généré par cryptage d'informations comprenant:
- un identifiant de l'entité du réseau central; et
- un identifiant d'au moins un service auquel le terminal mobile certifié a souscrit, ou un identifiant d'au moins une cellule gérée par une station de base sur laquelle le terminal mobile certifié a déjà subi un transfert avec autorisation de l'entité cœur de réseau.

6. Le procédé selon l'une quelconque des revendications 1 à 3, **caractérisé en ce que** la station de base cible effectue:
- obtenir la clé de déchiffrement, permettant de déchiffrer les données chiffrées sur la base d'une clé de chiffrement;
- générer un ticket d'autorisation, destiné à être fourni à un terminal mobile certifié, sur la base de la clé de cryptage; et
- transmettre le ticket d'autorisation généré au terminal mobile certifié.

7. Le procédé selon la revendication 6, **caractérisé en ce que** le ticket d'autorisation est généré par cryptage d'informations comprenant un identifiant de la station de base cible et/ou un identifiant de la cellule gérée par la station de base cible.

8. Le procédé selon l'une quelconque des revendications 6 et 7, **caractérisé en ce que** la station de base cible génère le ticket d'autorisation pour le terminal mobile, lorsque le terminal mobile a subi un transfert vers la station de base cible avec l'autorisation de ladite entité cœur de réseau.

9. Le procédé selon l'une quelconque des revendications 1 à 8, **caractérisé en ce que** le ticket d'autorisation fourni par le terminal mobile est obtenu par la station de base source, et **en ce que** la station de base cible transmet la clé de déchiffrement à la station de base source.

10. Le procédé selon l'une quelconque des revendications 1 à 8, **caractérisé en ce que** le ticket d'autorisation fourni par le terminal mobile est obtenu par la station de base source, et **en ce que** la station de base source transmet le ticket d'autorisation obtenu à la station de base cible.

11. Le procédé selon l'une quelconque des revendications 1 à 10, **caractérisé en ce que** le ticket d'autorisation est généré par cryptage d'informations comprenant une information d'horodatage représentative d'un instant d'expiration du ticket d'autorisation ou d'un instant de création du ticket d'autorisation, et en **en ce que** ledit procédé comprend la vérification de la validité du ticket d'autorisation sur la base desdites informations d'horodatage.

12. Le procédé selon l'une quelconque des revendications 1 à 11, **caractérisé en ce que** le ticket d'autorisation est généré par cryptage d'informations comprenant un identifiant du ticket d'autorisation, et **en ce que** ledit procédé comprend la vérification de la validité du ticket d'autorisation en comparant ledit identifiant avec au moins un identifiant contenu dans une liste de révocation.

13. Un système pour effectuer un transfert d'un terminal mobile (130) d'une station de base source (110) à une station de base cible (120), les stations de base source et cible étant adaptées pour communiquer directement l'une avec l'autre via des premières interfaces de communication respectives, les stations de base source et cible étant adaptées pour communiquer via des secondes interfaces de communication respectives avec une entité de réseau central (102), l'entité de réseau central étant une entité de gestion de mobilité gérant les abonnements aux services d'au moins la station de base cible et autorisant l'accès auxdits services par transfert aux seuls abonnés desdits services, **caractérisé en ce que** ledit système met en œuvre:
- des moyens pour obtenir (S302) un ticket d'autorisation fourni par le terminal mobile;
- des moyens pour vérifier si le ticket d'autorisation fourni par le terminal mobile est valide en déchiffrant le ticket d'autorisation avec une clé de décryptage fournie par l'entité de gestion de mobilité ayant généré le ticket d'autorisation et en vérifiant que le ticket d'autorisation a été effectivement généré par l'entité de gestion de mobilité ayant fourni la clé de décryptage, un ticket d'autorisation valide étant une indication que l'entité de gestion de mobilité a déjà effectué un contrôle d'accès pour le terminal mobile dans le cadre du transfert vers la station de base cible;
- des moyens pour effectuer (S304) directement le transfert via les premières interfaces de communication, mis en œuvre lorsque le ticket d'autorisation obtenu est valide.
